Europäisches Patentamt

**European Patent Office**

**Office européen des brevets**

(19)

(11) Publication number: **0 006 293**
A1

# EUROPEAN PATENT APPLICATION

(12)

(21) Application number: **79300832.7**

(22) Date of filing: **15.05.79**

(51) Int. Cl.³: **A 01 N 25/04,** C 07 D 213/00

(30) Priority: **31.05.78 GB 2566078**

(43) Date of publication of application: **09.01.80**
**Bulletin 80/1**

(84) Designated Contracting States: **BE CH DE FR GB IT NL
SE**

(71) Applicant: **IMPERIAL CHEMICAL INDUSTRIES
LIMITED, Imperial Chemical House Millbank, London
SW1P 3JF (GB)**

(72) Inventor: **Lawrence, Jeffrey Cyril, 60 Knowless Avenue,
Crowthorne Berkshire (GB)**
Inventor: **Coffee, Ronald Alan, Thursley Copse
Farnham, Haslemere Surrey (GB)**
Inventor: **Middleton, Michael Robert, 22 Walden
Avenue Arborfield Cross, Reading Berkshire (GB)**

(74) Representative: **Roberts, Timothy Wace et al, Imperial
Chemical Industries Limited Legal Department :
Patents Thames House North Millbank, London
SW1P 4QG (GB)**

(54) **Agrochemical formulations.**

(57) Agrochemical formulations, especially herbicidal for-
mulations, comprising water-in-oil emulsions of mean parti-
cle size below 10 microns wherein the oil phase is from 50
to 99% by weight, the aqueous phase being from 1 to 50% by
weight and containing 1 to 25% by weight of a water-soluble
agrochemical, especially a herbicide, the oil phase having
a resistivity at 20°C in the range $10^6$ to $10^{10}$ ohm cm, and
a viscosity at 20°C in the range 1 to 50 centistokes.

0006293

# AGROCHEMICAL FORMULATIONS

This invention relates to agrochemical formulations, and more particularly to herbicidal formulations containing water-soluble herbicides, including, for example the bipyridylium herbicides paraquat and diquat and the herbicide glyphosate.

By the term "agrochemical" is intended a chemical useful in agriculture, for example a pesticidal substance such as a herbicide, insecticide, fungicide, bactericide or the like; or a plant growth regulating chemical; or a nutrient substance, or the like.

The invention is particularly useful for certain herbicidal formulations.

Increasing use is being made in agriculture of the known ULV (ultra-low volume) spraying technique. This method uses relatively concentrated liquid formulations, containing e.g. 1 to 50% by weight of active ingredient, and a correspondingly low rate of application of the formulation per hectare, e.g. 1 to 25 litres per hectare, in contrast with more usual high volume spray rates of 200-500 litres per hectare, or more. With such relatively concentrated solutions, it is important to ensure that as much as possible of the formulation goes and stays where it is needed, i.e. on the plants being sprayed, and as little as possible is misdirected on to the ground or carried away by the wind. For this purpose, it is useful to apply electrostatically charged sprays. These are attracted to the foliage of plants; electrostatic forces carry them to the underside of leaves as well as to the top surfaces, and even coating is promoted. Hitherto electrostatic spraying of pesticides has not been widely adopted, for lack of convenient, reliable and cheap spraying apparatus. A suitable apparatus is however now available, and is described in U.K. Patent Application 29539/76 (U.S. Serial No. 812440). However, this apparatus tends to give inferior results when used to spray aqueous solutions.

The present invention provides a class of compositions comprising water-soluble agrochemicals, especially herbicides, particularly suited to low volume electrostatic spraying, in particular by the apparatus described in U.K. Patent Application 29539/76 (U.S. Serial 812440).

According to the present invention we provide an electrostatically sprayable ready-for-use formulation comprising a water-in-oil emulsion comprising finely divided droplets of mean diameter below 10 microns of an aqueous phase suspended in an oil phase, the oil phase comprising from 50 to 99%, preferably 80 to 99%, by weight of the composition and the aqueous phase comprising from 1 to 50%, preferably 1 to 20%, by weight of the composition and having dissolved in it a water-soluble agrochemical comprising from 1 to 25%, preferably 1 to 10%, by weight of the composition, the formulation having a resistivity at $20^{O}C$ in the range $1 \times 10^{6}$ to $1 \times 10^{10}$ ohm centimetre and a viscosity at $20^{O}C$ of 1 to 50 centistokes and being stabilised by from 0.1 to 10% by weight of the composition of an emulsifier.

We find that emulsions according to the invention are readily sprayed at satisfactory rates using the apparatus of U.K. Patent Application No 29539/76 (U.S. Serial 812440) and will give a range of mean spray droplet sizes of from about 30 to about 200 microns in diameter, according to the strength of the electrostatic field applied to them (the stronger the field the smaller the droplets), flow rate through the apparatus and other operating conditions.

The compositions of the invention may be prepared by preparing an oil phase of suitable resistivity and viscosity, and mixing it with the emulsifier. The water phase is prepared by dissolving the chosen herbicide in water to form a solution of the required concentration. The aqueous solution and the oil phase are then blended together in the required proportions to form the desired emulsion. The blending is carried out in a high shear mixer, for example, the "Vortex" mixture manufactured by Peter Silver and Sons of Hampton, Middlesex.

The aqueous phase of the emulsions of the invention is present dispersed in the oil phase in the form of small droplets having a mean particle diameter of less than 10 microns, and preferably in the range 0.1 to 2 microns. To obtain emulsions having this low particle size it is necessary to use appropriate amounts of a suitable emulsifying agent, and to blend the ingredients of the emulsion together using a high shear mixer. Up to a limit determined by the nature and amount of the emulsifier used, the particle size of the droplets in the emulsion depends on the energy used to blend the ingredients. Choice of a suitable emulsifier is within the skill of the formulation chemist; some products we have found particularly suitable are shown hereafter in the Examples.

The resistivity of formulations according to the invention is conveniently measured by measuring the resistance of a cell of standard dimensions containing the formulation held at a temperature of $20^{\circ}$C, using, for example, a Keithley electrometer. It is preferred that the resistivity of the formulations be in the range $10^7$ to $10^9$ ohm centimetres.

The viscosity of emulsions according to the invention is conveniently measured by timing the flow of a measured quantity of the emulsion through a hole of known size (as is done, for example, in the Redwood viscometer). It is preferred that the viscosity of the emulsion is in the range 5 to 30 centistokes.

The resistivity of the formulation depends in the first place on the properties of the organic diluent or diluents which form the oil phase. Similarly the viscosity of the emulsion depends in large part on the viscosity of the oil phase which forms the bulk of the emulsion; though the presence of the aqueous phase also has some effect, increasing as the proportion of aqueous phase in the emulsion increases.

High-boiling hydrocarbon liquids e.g. Aromasol H, mineral oils are convenient and relatively cheap but vary in their viscosities and have high resistivities (e.g. of the order of $10^{11}$ ohm centimetres). To bring down the resistivity of these materials, they may be mixed with polar solvents such as alcohols and in particular ketonic solvents. These have lower resistivities but are also usually not viscous enough; for example the useful solvent cyclohexanone has a resistivity of about $2 \times 10^{6}$ ohm centimetres, but a viscosity of only about 5 centistokes. An alternative way of reducing the resistivity to the desired level is to add an oil-soluble salt e.g. cupric oleate. A suitable material is sold for use as an antistatic charge dissipator with hydrocarbon fuels under the name 'ASA 3'; it consists of a complex mixture of copper and chromium cations with various organic acid anions. Addition of salts to hydrocarbon mixtures do not generally produce resistivities below about $10^{8}$ but they may be used in combination with polar solvents to produce lower resistivities if so desired.

Control of viscosity may be achieved by selection of, in particular, aliphatic hydrocarbons from the relatively low viscosity isoparaffinic materials sold under the name of 'Isopar' to the higher viscosity white oils and long chain chlorinated hydrocarbon products such as 'Cereclor' (Trademark) C42 or C48. Still higher molecular weight materials such as polybutenes e.g. 'Hyvis' (Trademark) or polystyrene may also be used.

The oil of the invention formulations phase may also comprise an agrochemical ingredient. This ingredient may constitute the oil phase by itself provided that it possesses suitable characteristics.

The compositions of the invention may be used to apply a wide variety of water-soluble agrochemicals, especially herbicides. Examples are the water-soluble salts (e.g. potassium salts) of the phenoxyalkanoic acid herbicides (the so-called hormone herbicides) such as 2,4-dichlorophenoxy acetic acid (2,4-D); 2-methyl-4-chlorophenoxy acetic acid (MCPA); and 2-(4-chloro-2-methylphenoxy) propionic acid (mecoprop). Mixtures of water-soluble herbicides may be used. Particularly useful herbicides in the invention are the water-soluble derivatives (salts, esters, etc) of the acid N-(phosphonomethyl)glycine (glyphosate); and the bipyridyl herbicides, e.g. salts (in particular chloride, bromide and metho-sulphate salts) of the 1,1'-dimethyl-4,4'-dipyridylium ion (paraquat) and the 1,1'-ethylene-2,2'-dipyridylium ion (diquat). Water-soluble agrochemicals other than herbicides which may be used in the invention include dodine (fungicide); and plant growth regulators such as chlormequat, ethephon and maleic hydrazide.

By incorporating another, different, agrochemical in the oil phase, as envisaged above, mixtures may be conveniently prepared.

The following Examples illustrate emulsions according to the invention. In each of Examples 1 to 9, the emulsions were made as follows. The ingredients of the oil phase were mixed with the emulsifier, while the water-soluble herbicide was dissolved in the water to form the aqueous phase. The oil phase and aqueous phase were then mixed in a high shear mixer until a stable emulsion having a mean particle size in the disperse phase of below 5 microns was produced. All the emulsions sprayed very satisfactorily from the device illustrated in figures 1 to 3 of UK patent application no 29539/76 (U.S. Serial 812440).

EXAMPLE 1

This Example illustrates an emulsion according to the invention comprising the herbicide diquat.  It was made up from the ingredients listed by the method described above.

| Ingredients | % w/w |
|---|---|
| Diquat dibromide | 1.1 |
| Span 80 | 2.9 |
| ASA 3 | 1.1 |
| White oil | 63.1 |
| 'Aromasol' H | 30.2 |
| Water | 1.6 |
| | 100.0 |

Internal Phase Volume = 2%
Viscosity at $20^{O}C$ = 8.7 cSt
Resistivity at $20^{O}C$ = $1.3 \times 10^{8}$ ohm cm


EXAMPLE 2

This Example illustrates an emulsion according to the invention comprising the herbicide glyphosate.  It was made up from the ingredients listed by the method described above.

| Ingredients | % w/w |
|---|---|
| Glyphosate, mono isopropyl amine salt | 3.4 |
| Span 80 | 0.6 |
| ASA 3 | 0.6 |
| Gas oil | 90.1 |
| 'Aromasol' H | 0.5 |
| Water | 4.8 |
| | 100.0 |

Internal Phase Volume = 6%

Viscosity at $20^{O}C$ = 6.9 cSt

Resistivity at $20^{O}C$ = 2.2 x $10^{8}$ ohm cm


EXAMPLE 3


This Example and the following Examples 4 to 7 illustrate emulsions according to the invention comprising the herbicide paraquat. They were made up from the ingredients listed by the method described above.

| Ingredients | % w/w |
|---|---|
| Paraquat dichloride | 12.1 |
| Span 80 | 2.8 |
| ASA 3 | 0.5 |
| Gas oil | 65.6 |
| 'Aromasol' H | 2.3 |
| Water | 16.7 |
| | 100.0 |

Internal Phase Volume = 24%

Viscosity at $20^{O}C$ = 12.7 cSt

Resistivity at $20^{O}C$ = 3.3 x $10^{8}$ ohm cm

EXAMPLE 4

| Ingredients | % w/w |
|---|---|
| Paraquat dichloride | 3.1 |
| 'Ethomeen' O/12 | 3.1 |
| Oleic acid | 3.2 |
| ASA 3 | 0.5 |
| White oil | 50.9 |
| 'Aromasol' H | 34.9 |
| Water | 4.3 |
| | 100.0 |

Internal Phase Volume = 6%

Viscosity at $20^{\circ}C$ = 9.8 cSt

Resistivity at $20^{\circ}C$ = 2.9 x $10^8$ ohm cm

EXAMPLE 5

| Ingredients | % w/w |
|---|---|
| Paraquat dichloride | 3.1 |
| Span 80 | 2.8 |
| 'Aerosol' OT100 | 1.1 |
| White oil | 51.2 |
| 'Aromasol' H | 37.5 |
| Water | 4.3 |
| | 100.0 |

Internal Phase Volume = 6%

Viscosity at $20^{\circ}C$ = 7.5 cSt

Resistivity at $20^{\circ}C$ = 1.6 x $10^8$ ohm cm

EXAMPLE 6

| Ingredients | % w/w |
|---|---|
| Paraquat dichloride | 3.1 |
| Span 80 | 2.8 |
| Cupric oleate | 1.1 |
| White oil | 51.3 |
| 'Aromasol' H | 37.4 |
| Water | 4.3 |
| | 100.0 |

Internal Phase Volume = 6%

Viscosity at $20^{\circ}C$ = 7.2 cSt

Resistivity at $20^{\circ}C$ = 1.4 x $10^8$ ohm cm


EXAMPLE 7

| Ingredients | % w/w |
|---|---|
| Paraquat dichloride | 3.1 |
| Span 80 | 2.8 |
| ASA 3 | 0.1 |
| White oil | 51.8 |
| 'Aromasol' H | 37.9 |
| Water | 4.3 |
| | 100.0 |

Internal Phase Volume = 6%

Viscosity at $20^{\circ}C$ = 6.7 cSt

Resistivity at $20^{\circ}C$ = 7.6 x $10^8$ ohm cm


EXAMPLE 8

This Example illustrates an emulsion according to the invention comprising the herbicides mecoprop and 3,6-dichloropicolinic acid in admixture.

| Ingredients | % w/w |
|---|---|
| Mecoprop, iso octyl ester | 39.85 |
| ASA 3 | 1.11 |
| 3,6-dichloropicolinic acid, monoethanolamine salt | 0.87 |
| Water | 1.66 |
| B 246 | 0.55 |
| 'Isopar' L | 26.38 |
| White oil | 29.58 |
| | 100.00 |

Viscosity at $20^{\circ}C$ = 9.8 centistokes

Resistivity at $20^{\circ}C$ = 1.9 x $10^8$ ohm cm

## EXAMPLE 9

This Example illustrates an emulsion according to the invention comprising the plant growth regulator 1-naphthylacetic acid (as its sodium salt).

| Ingredients | % w/w |
|---|---|
| Sodium 1-naphthylacetate | 1.1 |
| Polymeric Surfactant B 246 | 3.0 |
| 'Ethomeen' O/12 | 3.3 |
| Oleic acid | 3.3 |
| White oil | 53.4 |
| 'Isopar' L | 31.7 |
| Water | 4.2 |
| | 100.0 |

Internal phase volume = 4%

0006293

Viscosity at 20°C =                    centistokes
Resistivity at 20°C =                  ohm cm

Viscosity at 20°C =                    centistokes

- 12 -

0006293

More information on some of the ingredients referred to in the Examples is given below:

| | |
|---|---|
| Span 80 | Sorbitan monooleate ex ICI Americas Inc |
| ASA 3 | Anti-static additive ex Shell Chemicals UK Limited |
| White oil | Highly paraffinic hydrocarbon oil |
| Gas oil | Mixed hydrocarbon oil, generally used as boiler fuel oil |
| 'Ethomeen' O/12 | Ethoxylated amine surfactant ex AKZO Chemie; the condensation product of the amine derived from mixed fatty acids, primarily oleic, with 2 moles of ethylene oxide |
| 'Isopar' L | Paraffinic hydrocarbon solvent |
| Oleic acid | Commercial grade, 80% pure |
| 'Aromasol' H | Hydrocarbon solvent, mainly trimethyl benzenes |
| 'Aerosol' OT 100 | Sodium dioctyl sulphosuccinate ex Cyanamid Limited |
| B 245 | Polymeric surfactant : condensation product of 2 moles of poly(12-hydroxystearic acid) with one mole of poly(ethylene glycol)1500, made by the method of U.K. Patent Specification 2 002 400. |

TWR/vmc

9 May 79

1. An electrostatically sprayable ready-for-use formulation comprising a water-in-oil emulsion comprising finely divided droplets of mean diameter below 10 microns of an aqueous phase suspended in an oil phase, the oil phase comprising from 50 to 99% by weight of the composition and the aqueous phase comprising from 1 to 50% by weight of the composition, and having dissolved in it a water-soluble agrochemical comprising from 1 to 25% by weight of the composition, the formulation having a resistivity at $20^{\circ}C$ in the range $1 \times 10^{6}$ to $1 \times 10^{10}$ ohm centimetres and a viscosity at $20^{\circ}C$ of 1 to 50 centistokes, and being stabilised by from 0.1 to 10% by weight of the composition of an emulsifier.

2. A formulation as claimed in claim 1 in which the agrochemical is a herbicide.

3. A formulation as claimed in either of claims 1 or 2 in which the oil phase comprises from 80 to 99% by weight of the composition, the aqueous phase comprises from 1 to 20% by weight of the composition and the agrochemical comprises from 1 to 10% by weight of the composition.

4. A formulation as claimed in any of claims 1 to 3 in which the resistivity of the formulation is in the range $10^{7}$ to $10^{9}$ ohm centimetres.

5. A formulation as claimed in any of the preceding claims in which the viscosity at $20^{\circ}C$ of the formulation is in the range 5-30 centistokes.

6. A formulation as claimed in any of the preceding

0006293

claims in which the agrochemical is a bipyridylium herbicide, e.g. paraquat.

7. A formulation according to claim 1 substantially as herein described with reference to any of the Examples.

## EUROPEAN SEARCH REPORT

**European Patent Office**

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | FR - A - 2 256 724 (ICI)<br>* claims 1-12 * | 1-7 | A 01 N 25/04<br>C 07 D 213/00 |
| | --- | | |
| | FR - A - 2 358 207 (ICI)<br>* page 12, lines 4-6; page 18, lines 1-10 * | 1-7 | |
| | --- | | |
| | TRANSACTIONS OF THE ASAE, vol. 21, no. 1<br>January 1978<br>ST. JOSEPH (US)<br>J.W. CARROZ e.a. "Electrostatic Induction Parameters to attain maximum Spray Charge" pages 63-69<br>* page 66, right-hand column: Fluid Composition; page 69, right-hand column, lines 14-16, 25-27 * | 1-7 | |
| | ----- | | |

**TECHNICAL FIELDS SEARCHED (Int.Cl.²)**

A 01 N 17/10

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 30-08-1979 | NATUS |

EPO Form 1503.1 06.78